Europäisches Patentamt

European Patent Office

Office européen des brevets

(11) Publication number: **0 222 622 B1**

## EUROPEAN PATENT SPECIFICATION

(45) Date of publication of patent specification: **06.11.91**

(51) Int. Cl.⁵: **B05B 5/025, A01M 7/00**

(21) Application number: **86308818.3**

(22) Date of filing: **12.11.86**

(54) **Inductor nozzle assembly for crop sprayers.**

(30) Priority: **13.11.85 US 797698**

(43) Date of publication of application:
**20.05.87 Bulletin 87/21**

(45) Publication of the grant of the patent:
**06.11.91 Bulletin 91/45**

(84) Designated Contracting States:
**DE GB IT**

(56) References cited:
**EP-A- 0 107 324**
**FR-A- 2 342 796**
**FR-A- 2 358 207**
**FR-A- 2 502 029**

(73) Proprietor: **PARKER HANNIFIN CORPORATION**
**17325 Euclid Avenue**
**Cleveland Ohio 44112(US)**

(72) Inventor: **Burls, Gary E.**
**510 North Main Street**
**Amherst Ohio 44001(US)**
Inventor: **Parmentar, William F.**
**4931 Woodview Drive**
**Vermilion Ohio 44001(US)**

(74) Representative: **Purvis, William Michael**
**Cameron et al**
**D. Young & Co. 10 Staple Inn**
**London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to air blast crop sprayers to deposit charged, atomized pesticides onto fruit trees in an orchard.

Air blast crop sprayers are commonly used to apply pesticides to fruit trees in an orchard, grapevines, and, to a lesser extent, on row crops. Commercially available sprayers of this type generally include a frame to be pulled by a truck or tractor, a tank mounted on the forward end of the frame and to hold a mixture of water and pesticide, delivery lines connected to the tank which mount a plurality of spaced spray nozzles and an air blast fan mounted at the rearward end of the frame in close proximity to the spray nozzles. The waterborne pesticide is pumped under pressure through the delivery lines to the nozzles where it is ejected in atomized form and then propelled onto fruit trees in an orchard or grapevines by a high velocity air stream produced by the air blast fan.

The spray nozzles used in most commercially available air blast sprayers are airless nozzles which eject a stream of atomized waterborne pesticide in a variety of spray patterns depending upon the configuration of the discharge orifice of the nozzle. Several nozzles of this kind are mounted along the chemical delivery lines of the air blast sprayer and form essentially a mist of waterborne pesticide which is entrained in the air stream produced by the air blast fan and propelled toward the adjacent trees.

One problem with the application of waterborne pesticides in this manner is that complete coverage of the trees is not ensured. The waterborne pesticide in atomized form is subject to evaporation before it reaches the tree, and the pesticide which does reach the tree can drip off the leaves and branches like rainwater. Accordingly, a relatively large quantity of pesticide is required per acre to achieve acceptable coverage of trees, vines or row crops.

Patent Specification No. US-A-4 168 327 discloses an electro static sprayer wherein liquid and compressed air are piped to co-axial passages in a nozzle where the air stream shears the liquid into droplets and carries it out of a spray discharge opening, an inductor ring being provided to charge the droplets and the airstream forming a slipstream which keeps the inductor ring dry.

According to one aspect of the invention there is provided an air blast crop sprayer to deposit chemicals onto object crops such as trees in an orchard, grapevines and row crops on both sides of a row and including an air blast fan operable to produce a high velocity air stream, delivery lines carrying the chemicals and disposed on opposite sides of the air blast fan and an inductor nozzle assembly, the inductor nozzle assembly comprising:

spray nozzles mounted on the delivery lines to receive chemicals therefrom and each having a discharge orifice operable to discharge the chemicals in an atomized particle stream;

a housing having a substantially conical-shaped wall defining an exterior about which air from said air blast fan can flow and a hollow interior formed with a cross section tapering radially inwardly from an entrance opening to a reduced diameter discharge opening, the spray nozzle being disposed within the hollow interior and oriented so that the discharge orifice ejects the atomized particle stream into the discharge opening;

an inductor ring mounted on the wall of the housing at the discharge opening and applying an induced electrical charge to the particle stream ejected into the discharge opening; and

the spray nozzle and the housing being positioned along the delivery line of the air blast sprayer with respect to the air blast fan so that the high velocity air stream from the air blast fan forms an exterior stream of air which flows about the exterior of the housing and an interior stream of air which enters the housing through the entrance opening and moves toward the reduced diameter discharge opening, the interior air stream being accelerated within the tapered hollow interior of the housing from the entrance opening to the reduced diameter discharge opening to form a barrier of air between the inductor ring and the atomized particle stream, and the interior and exterior air streams together propelling the charged particles stream toward the object crops.

Such a sprayer can provide for improved efficiency in the deposition of waterborne pesticides onto the trees of an orchard by imparting an induced electrical charge to a stream of atomized pesticide from the sprayer so that the pesticide is electrically attracted to the trees.

The inductor ring, may be charged with a relatively low voltage of about 6,000 volts.

The spray nozzles employed in the inductor nozzle assembly are preferably commercially available airless nozzles which operate hydraulically to discharge preferably a conical-shaped pattern of finely divided atomized particles of waterborne pesticide from their discharge orifices. Each spray nozzle may include a barrel having external threads which threadedly receive a sleeve having mating internal threads. A plurality of spaced mounting arms extend radially outwardly from the sleeve of the spray nozzle and releasably mount to the wall of the housing to secure the housing to the fixed spray nozzle. The sleeve, and, in turn, the housing are movable axially along the barrel of the spray nozzle upon rotation of the sleeve to vary the position of the inductor ring with respect to the discharge orifice of the spray nozzle.

The waterborne pesticide ejected from the discharge orifice of the spray nozzle is atomized to form a stream of small liquid particles or droplets within a zone of atomization which is spaced a short distance from the discharge orifice. Preferably, the inductor ring mounted in the wall of the housing is located within the zone of atomization to impart a charge to the particle stream. As described above, the housing is rotatable with the sleeve of the nozzle barrel to permit axial movement of the housing with respect to the spray nozzle. This permits the position of the inductor ring relative to the discharge orifice of the spray nozzle to be adjusted to ensure proper positioning of the inductor ring within the zone of atomization. It is contemplated that such adjustment might be necessary if different spray nozzles are employed or if the line pressure of the pesticide supplied by the tank is significantly altered.

It is desirable to provide for the ejection of the charged atomized pesticide from the discharge opening of the housing and onto the trees without wetting the inductor ring. If the inductor ring were to become saturated with the waterborne pesticide stream, which is held at or near earth potential, a conductive path from the inductor ring to earth could be created which would cause the inductor ring to lose its electrical potential and become ineffective in charging the pesticide. It is therefore important to create a barrier between the inductor ring and the waterborne pesticide stream to maintain the inductor ring and adjacent housing dry.

The particle stream of waterborne pesticide from the spray nozzle is prevented from wetting the inductor ring by the configuration of the wall of the housing which tapers radially inwardly from an enlarged entrance opening to a reduced diameter discharge opening. The housing is mounted to the spray nozzle so that its outer wall tapers inwardly in the direction of movement of the high velocity air stream from the air blast fan. A venturi effect is therefore produced in which the air stream from the air blast fan is accelerated within the housing from its enlarged entrance opening toward the reduced diameter discharge opening thereby creating a moving barrier of air over the surface of the inductor ring at the discharge opening. This barrier or stream of high velocity air prevents the stream of waterborne pesticide from contacting the inductor ring, and also forces the atomized particles out of the discharge opening of the housing and onto the trees to be sprayed.

The charged particle stream of waterborne pesticide can more effectively cover the trees in an orchard because the pesticide is electrically attracted to the earthed trees. Whereas prior art spraying systems direct an uncharged mist or spray of waterborne pesticides onto the trees which can run off or drop to the ground like rainwater, the inductively charged fine particle stream of waterborne pesticide produced by the inductor nozzle assembly of this invention is positively attracted to the trees. This can greatly reduce run-off of the pesticide and provide for more complete deposition of the chemicals over the entire surface area of the trees. The deposition efficiency created by electrostatically charging the waterborne pesticide, and by atomizing the stream with an airless spray nozzle to form relatively fine particles or droplets, can result in a substantial reduction in the volume of pesticide required per acre of trees or grapevines. It is estimated that less than ten gallons of pesticide per acre is required effectively to coat the trees of an orchard or grapevines of a vineyard with an air blast sprayer of the invention, whereas fifty to one hundred gallons of pesticide per acre are required using conventional spray nozzles in air blast sprayers.

The invention is diagrammatically illustrated by way of example in the accompanying drawings, in which:

Figure 1 is a perspective view of an air blast crop sprayer according to the invention connected to a tractor;

Figure 2 is a schematic view of an air blast fan of the sprayer of Figure 1 showing the path of air stream it produces for movement through an inductor nozzle assembly herein; and

Figure 3 is a side elevational view in partial cross section of an inductor nozzle assembly of the sprayer.

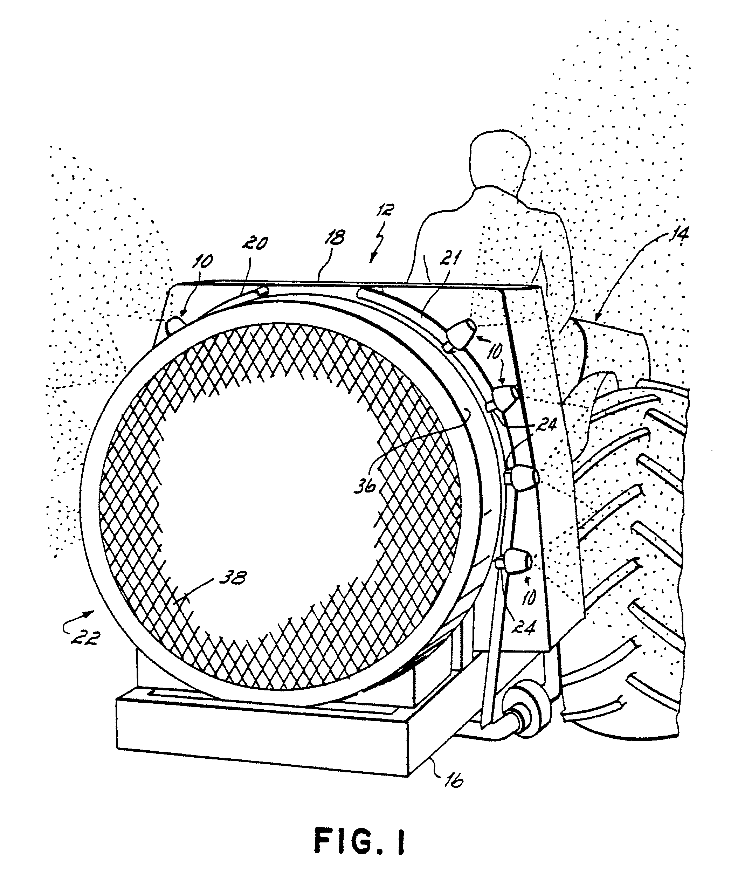

Referring to Figure 1, a plurality of inductor nozzle assemblies 10 are shown mounted on an air blast sprayer 12 pulled by a tractor 14. The air blast sprayer 12 includes a frame 16, a tank 18 mounted at the forward end of the frame 16 and containing a mixture of water and pesticide, an air blast fan 22 mounted at the rearward end of the frame 16, and a pair of arcuate fluid delivery lines 20, 21 communicating with the tank 18 which are mounted between the tank 18 and the fan 22 on opposite sides of the fan 22. A plurality of nozzle mounting blocks 24 are connected at spaced intervals along both of the fluid delivery lines 20, 21, each of which mounts an inductor nozzle assembly 10 to transmit the mixture of water and pesticide thereto.

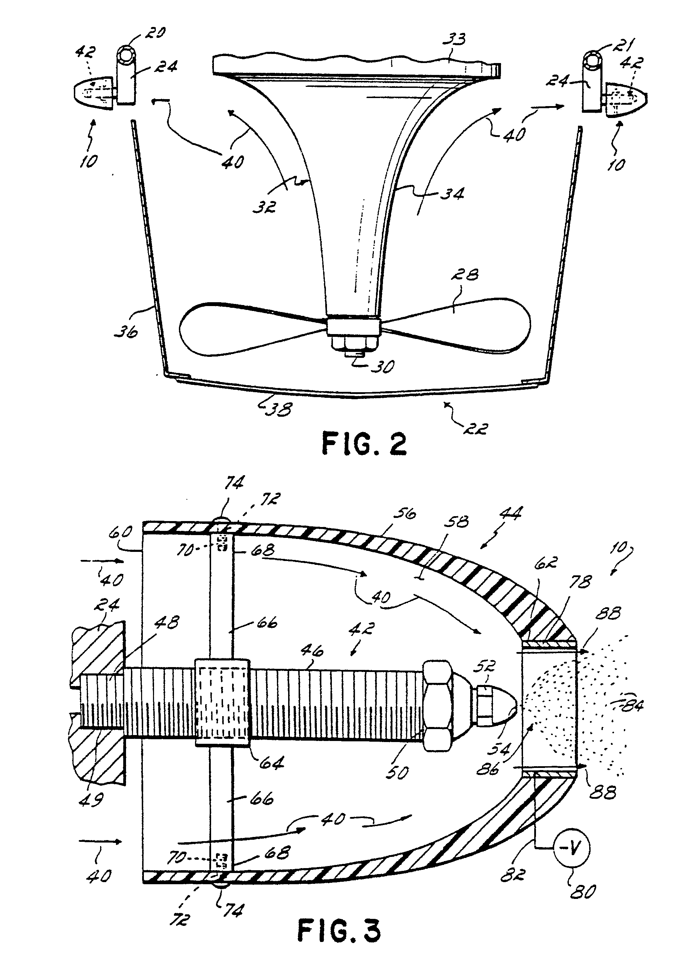

As shown in Figure 2, the air blast fan 22 includes a fan blade 28 mounted upon a shaft 30 which is disposed within a fixed deflector 32. The deflector 32 is formed with an arcuate outer wall 34 which tapers radially outwardly from the fan blade 28 to a base 33 of the deflector 32. The fan blade 28 and the deflector 32 are enclosed within a protective shroud 36 having a screen 38 mounted at its forward end near the fan blade 28. The air blast fan 22 is operable to produce a high velocity air stream 40 which is drawn into the shroud 36 past the screen 38, and then deflected radially outwardly by the arcuate outer wall 34 of the deflector 32 at its base 33. Each of the inductor nozzle assemblies 10 mounted on the fluid delivery lines 20, 21 is positioned in substantially the same vertical plane as the base 33 of the deflector 32, as viewed in Figure 2, so that they are all directly in the path of the air stream 40.

Referring now to Figure 3, the inductor nozzle assembly 10 includes a spray nozzle 42 disposed within the interior of a housing 44 which is mounted thereto. In one embodiment the spray nozzle 42 is an hydraulically operated, airless nozzle commercially available from Spraying Systems Company of Wheaton, Illinois under Model No. TX2. Similar airless spray nozzles are also available from other sources.

Each spray nozzle 42 includes a hollow barrel 46 formed with external threads along the entire length of its outer wall. A rearward end 48 of the barrel is screwed into a threaded bore 49 formed in the respective nozzle mounting block 24 to connect the spray nozzle 42 with the waterborne pesticide supplied from the tank 18. The waterborne pesticide is maintained at substantially earth potential from the tank 18, through the delivery lines 20, 21 and into the spray nozzles 42. Mounted on the forward end 50 of the barrel 46 is a nozzle tip 52 having a discharge orifice 54 which ejects an atomized stream of waterborne pesticide in the form of finely divided particles or droplets from the spray nozzle 42 and through an opening in the housing 44, as described below. The Spraying Systems Company Model TX2 has a discharge orifice 54 which produces a conical-shaped spray pattern, but it is contemplated that other spray patterns from different shaped discharge orifices of other spray guns would be suitable for use in the inductor nozzle assembly 10.

The housing 44 includes a wall 56 formed of a dielectric material which defines a hollow interior 58. The wall 56 tapers radially inwardly from an enlarged entrance opening 60 to a reduced diameter discharge opening 62 forming an essentially frusto-conical shape. The housing 44 is mounted to the fixed spray nozzle 42 by a sleeve 64 and a plurality of mounting arms 66 in a position such that the discharge orifice 54 of the spray nozzle 42 ejects the stream of atomized pesticide through the discharge opening 62. The sleeve 64 is formed with internal threads which mate with the external threads on the barrel 46 of the spray nozzle 42. The mounting arms 66, only two of which are shown in the drawings, extend radially outwardly from the sleeve 64 to the wall 56 of the housing 44. The outer end 68 of each mounting arm 66 is formed with a threaded bore 70 which aligns with a bore 72 formed in the wall 56 of the housing 44. A screw 74 extends through the bore 72 in the wall 56 and into the threaded bore 70 of the mounting arm 66 to secure the housing 44 to the sleeve 70. The sleeve 64, and, in turn, the housing 44, are rotatable with respect to the threaded barrel 46 for axial movement thereof along the spray nozzle 42. Preferably, the housing 44, mounting arm 66 and screws 74 are formed of a suitable dielectric material.

As shown in Figure 2, the housing 44 of the inductor nozzle assembly 10 is oriented with respect to the air stream 40 produced by the air blast fan 22 so that the wall 56 of the housing 44 decreases in diameter or tapers inwardly in the direction of movement of the air stream 40. The wall 56 thus produces a venturi effect in which the air stream is accelerated in moving from the enlarged entrance opening 60 to the discharge opening 62, for purposes to become apparent below.

An inductor ring 78 is mounted to the wall 56 of the housing 44 at its discharge opening 62. The inductor ring 78 is preferably a circular band of an electrically conductive material which does not deteriorate in the presence of the pesticide ejected from the discharge orifice 54 of the spray nozzle 42. The inductor ring 78 is charged with an electrical potential in the region of approximately 6,000 volts by a source of voltage 80 connected to the inductor ring 78 by an electrical line 82, shown schematically in Figure 3.

The advantages of the inductor nozzle assembly 10 are best understood with reference to a description of the method of its operation in spraying waterborne pesticides upon the trees of an orchard. Waterborne pesticide or fertilizer is first directed, under pressure, into the hollow barrel 46 of each spray nozzle 42 through the nozzle mounting blocks 24. The spray nozzles 42 are disposed at intervals along each of the arcuate fluid delivery lines 20, 21 on opposite sides of the air blast fan 22, from ground level to positions just short of vertical as viewed in Figure 1, to cover the complete height of the trees to be coated on both sides of a row (not shown). The waterborne pesticide is ejected from the discharge orifice 54 to form an atomized stream of particles or droplets 84 in a generally conical-shaped spray pattern. Atomization of the waterborne pesticide occurs at a short distance from the discharge orifice 54 of the spray nozzle 42 within a zone of atomization labelled generally with the reference number 86.

An inductive charge is applied to the atomized stream of droplets 84 by the inductor ring 78 within the zone of atomization 86. The negatively charged inductor ring 78 applies a positive electrostatic charge on the droplets 84 by induction before they exit the discharge opening 62 of the housing 44. The positively charged droplets 84 are then attracted to the earthed trees onto which they are sprayed which greatly improves the deposition efficiency and substantially reduces the loss of pesticide due to run-off.

The spacing between the discharge orifice 54 and the inductor ring 78 is chosen so that the inductor ring 78 is positioned within the zone of atomization 86. The location of the zone of atomization 86 is dependent upon the line pressure at which the waterborne pesticide is supplied to the spray nozzles 42 from the tank 18, and, to some extent, the configuration of the discharge orifice 54. Variations in the location of the zone of atomization can be compensated for. As described above, the axial position of the housing 44, and, in turn, the inductor ring 78, can be varied with respect to the discharge orifice of the spray nozzle 42 by rotating the sleeve 64 along the nozzle barrel 46. Preferably, the width of the inductor ring 78 is about 12.5 mm (0.5 inches).

In order to ensure that the atomized stream of droplets 84 is properly charged, the inductor ring 78 must be maintained at its full electrical potential. If the stream of waterborne pesticide which is held at earth potential was permitted to wet the surface of the inductor ring 78, a conductive path from the inductor ring 78 to earth could be created which would earth the inductor ring 78 and render it ineffective in charging additional droplets 84.

The inductor ring 78 is maintained dry by a barrier of air which results from a venturi effect created by the conical-shape of the wall 56 of housing 44. As mentioned above, the high velocity air stream 40 produced by the air blast fan 22 is directed radially outwardly by the arcuate outer wall 34 of the deflector 32 toward the inductor nozzle assembly 10. The air stream 40 enters the enlarged entrance opening 60 of the housing 44 and moves toward the discharge opening 62. Because the discharge opening 62 is of reduced diameter compared to the entrance opening 60, the housing 44 acts like a venturi and accelerates the air stream 40 from the entrance opening 60 to the discharge opening 62. The accelerated stream of air forms a thin barrier 88 between the atomized stream of waterborne pesticide held at earth potential and the charged inductor ring 78, and also expels the atomized stream of droplets 84 out of the housing 44 through the discharge opening 62 after they become electrostatically charged. The barrier 88 prevents the inductor ring 78 from becoming saturated with the waterborne pesticide and thus maintains the inductor ring 78 at substantially its full electrical potential.

The diameter of the discharge opening 62 and the inductor ring 78 are preferably large enough to provide a space for the air barrier 88 between the conical spray pattern of the stream of atomized droplets 84 and the inductor ring 64. Using a Spraying Systems Company Model TX2 spray nozzle 42 with an air blast fan 22 which produces an air stream 40 having a velocity of about 160km/hour (100mph) at the enlarged entrance opening 60 of the housing 44, it has been found that an inductor ring 78 of about 33 mm (1.3 inches) in diameter is large enough to accommodate both the spray pattern and the air barrier 88. the air barrier 88 therefore functions both to maintain the inductor ring 78 dry, and, together with the remainder of the accelerated air stream flowing through the housing 44, to propel the stream of atomized droplets 84 outwardly from the discharge opening 62 and onto the trees to be coated.

**Claims**

1. An air blast crop sprayer (12) to deposit chemicals onto object crops such as trees in an orchard, grapevines and row crops on both sides of a row and including an air blast fan (22) operable to produce a high velocity air stream (40), delivery lines (20, 21) carrying the chemicals and disposed on opposite sides of the air blast fan (22) and an inductor nozzle assembly (10), the inductor nozzle assembly (10) comprising:
   spray nozzles (42) mounted on the delivery lines (20, 21) to receive chemicals therefrom and each having a discharge orifice (54) operable to discharge the chemicals in an atomized particle stream;
   a housing (44) having a substantially conical-shaped wall (56) defining an exterior about which air from said air blast fan can flow and a hollow interior (58) formed with a cross section tapering radially inwardly from an entrance opening (60) to a reduced diameter discharge opening (62), the spray nozzle (42) being disposed within the hollow interior and oriented so that the discharge orifice (54) ejects the atomized particle stream into the discharge opening (62);
   an inductor ring (78) mounted on the wall of the housing at the discharge opening and applying an induced electrical charge to the particle stream ejected into the discharge opening (62); and
   the spray nozzle (42) and the housing (44) being positioned along the delivery line of the air blast sprayer with respect to the air blast fan (22) so that the high velocity air stream (40) from the air blast fan (22) forms an exterior stream of air which flows about the exterior of the housing (44) and an interior stream of air which enters the housing (44) through the entrance opening (60) and moves toward the reduced diameter discharge opening (62), the interior air stream being accelerated within the tapered hollow interior (58) of the housing (44) from the entrance opening (60) to the reduced diameter discharge opening (62) to form a barrier of air (88) between the inductor ring (78) and the atomized particle stream, and the interior and exterior air streams together propelling the charged particles stream toward the object crops.

2. An air blast crop sprayer according to claim 1, in which the spray nozzle includes a barrel (46) having an outer wall formed with external threads, and a sleeve (64) having internal threads engageable with the external threads of the barrel (46), the sleeve (64) being rotatable with respect to the barrel (46) for axial movement therealong.

3. An air blast crop sprayer according to claim 2, further including a plurality of spaced mounting arms (66) each having an inner end connected to the sleeve (64) and an outer end extending radially outwardly to the wall (56) of the housing (44), and means (70, 72, 74) for releasably mounting the mounting arms (66) to the wall (56) of the housing (44).

4. An air blast crop sprayer according to claim 3, in which the wall (56) of the housing is formed with a plurality of spaced bores (72) in alignment with the mounting arms (66), the outer end of each of the mounting arms being formed with an internally threaded bore (70) to receive a screw (74) inserted through the bores (72) in the wall of the housing to mount the housing to the spray nozzle (42).

**Revendications**

1. Pulvérisateur de cultures à soufflerie d'air (12) destiné à déposer des produits chimiques sur les cultures concernées telles que des arbres dans un verger, des vignes ou des cultures en rangées, des deux côtés de chaque rangée, ce pulvérisateur comprenant un ventilateur de soufflerie d'air (22) servant à produire un courant d'air à grande vitesse (40), des conduites de distribution (20,21) transportant les produits chimiques et disposées sur les côtés opposés du ventilateur de soufflerie d'air (22), et un ensemble de buses à inducteurs (10), l'ensemble de buses à inducteurs (10) comprenant :

des buses de pulvérisation (42) montées sur les conduites de distribution (20,21) pour recevoir les produits chimiques de celles-ci et comportant chacune un orifice de décharge (54) servant à décharger les produits chimiques sous la forme d'un jet de particules pulvérisées;

un boîtier (44) muni d'une paroi de forme sensiblement conique (56) définissant une partie extérieure autour de laquelle peut s'écouler l'air provenant du ventilateur de soufflerie d'air, et une partie intérieure creuse (58) à section transversale se rétrécissant radialement vers l'intérieur depuis une ouverture d'entrée (60) jusqu'à une ouverture de décharge de diamètre réduit (62), la buse de pulvérisation (42) étant disposée à l'intérieur de la partie intérieure creuse et orientée de façon que l'orifice de décharge (54) éjecte le jet de particules pulvérisées dans l'ouverture de décharge (62);

un anneau d'inducteur (78) monté sur la paroi du boîtier à l'endroit de l'ouverture de décharge et destiné à appliquer une charge électrique induite au jet de particules éjectées dans l'ouverture de décharge (62) ; et

la buse de pulvérisation (42) et le boîtier (44) étant placés le long de la conduite de distribution du pulvérisateur à soufflerie d'air, par rapport au ventilateur de soufflerie d'air (22), de façon que le courant d'air à grande vitesse (40) provenant du ventilateur de soufflerie d'air (22) forme un courant d'air extérieur s'écoulant autour de la partie extérieure du boîtier (44) et un courant d'air intérieur pénétrant dans le boîtier (44) par l'ouverture d'entrée (60) et se déplaçant vers l'ouverture de décharge de diamètre réduit (62), le courant d'air intérieur étant accéléré dans la partie intérieure creuse conique (58) du boîtier (44) depuis l'ouverture d'entrée (60) jusqu'à l'ouverture de décharge de diamètre réduit (62), de manière à former une barrière d'air (88) entre l'anneau d'inducteur (78) et le jet de particules pulvérisées, et les courants d'air intérieur et extérieur contribuant ensemble à propulser le jet de particules chargées vers les cultures concernées.

2. Pulvérisateur de cultures à soufflerie d'air selon la revendication 1, caractérisé en ce que la buse de pulvérisation comprend un canon (46) à paroi extérieure munie d'un pas de vis extérieur, et un manchon (64) muni d'un pas de vis intérieur se vissant sur le pas de vis extérieur du canon (46), le manchon (64) pouvant tourner par rapport au canon (46) pour se déplacer axialement le long de celui-ci.

3. Pulvérisateur de cultures à soufflerie d'air selon la revendication 2, caractérisé en ce qu'il comprend en outre un certain nombre de bras de monture espacés (66) comportant chacun une extrémité intérieure reliée au manchon (64) et une extrémité extérieure dirigée radialement vers l'extérieur contre la paroi (56) du boîtier (44), et des moyens (70,72,74) permettant de monter de manière amovible les bras de monture (66) sur la paroi (56) du boîtier (44).

4. Pulvérisateur de cultures à soufflerie d'air selon la revendication 3, caractérisé en ce que la paroi (56) du boîtier est percée d'un certain nombre de perçages espacés (72) en alignement avec les bras de monture (66), l'extrémité extérieure de chacun des bras de monture étant munie d'un perçage fileté intérieurement (70) pour recevoir une vis (74) passant dans les perçages (72) de la paroi du boîtier, de manière à monter le boîtier sur la buse de pulvérisation (42).

**Patentansprüche**

1. Feld-Gebläsespritzvorrichtung (12) zum Aufbringen von Chemikalien auf Zielkulturpflanzen wie z.B. Obstbäume, Weinstöcke oder Reihenkulturen auf beiden Seiten einer Reihe, mit einem Gebläseventilator (22), der zur Erzeugung eines Hochgeschwindigkeitsluftstroms (40) betrieben werden kann, mit Förderleitungen (20, 21), die zum Befördern der Chemikalien dienen und sich an entgegengesetzten Seiten des Gebläseventilators (22) befinden, und mit einer Induktionsdüsenanordnung (10), wobei diese Induktionsdüsenanordnung (10) versehen ist mit:
an den Förderleitungen (20, 21) zur Aufnahme von Chemikalien daraus angeordneten Spritzdüsen (42), von denen jede eine Auslaßöffnung (54) hat, die zum Ausstoßen der Chemikalien in einem zerstäubten Teilchenfluß betrieben werden kann,
einem Gehäuse (44) mit einer im wesentlichen konisch geformten Wand (56), die eine Außenseite bildet, um die herum Luft von dem Gebläseventilator strömen kann, und einen hohlen Innenraum (58) begrenzt, der mit einem sich radial nach innen ausgehend von einer Einlaßöffnung (60) in Richtung auf eine Auslaßöffnung (62) mit einem verringerten Durchmesser hin verjüngenden Querschnitt ausgebildet ist, wobei die Spritzdüse (42) in dem hohlen Innenraum angeordnet und so ausgerichtet ist, daß die Auslaßmündung (54) den zerstäubten Teilchenfluß in die Auslaßöffnung (62) hinein ausstößt,
einem Induktorring (78), der an der Wand des Gehäuses an der Auslaßöffnung befestigt ist und den in die Auslaßöffnung (62) ausgestoßenen Teilchenfluß mit einer induzierten elektrischen Ladung versieht, und
wobei die Spritzdüse (42) und das Gehäuse (44) entlang der Förderleitung der Gebläsezerstäubervorrichtung relativ zu dem Gebläseventilator (22) so positioniert sind, daß der Hochgeschwindigkeitsluftstrom (40) des Gebläseventilators (22) einen Außenluftstrom, der außen um das Gehäuse strömt, und einen Innenluftstrom bildet, der in das Gehäuse (44) durch die Einlaßöffnung (60) eintritt und sich in Richtung auf die Auslaßöffnung (62), die einen verringerten Durchmesser hat, bewegt, wobei der Innenluftstrom innerhalb des konisch zulaufenden hohlen Innenraums (58) des Gehäuses (44) von der Einlaßöffnung (60) zur Auslaßöffnung (62) hin, die einen verringerten Durchmesser hat, beschleunigt wird, um eine Luftbarriere (88) zwischen dem Induktorring (78) und dem zerstäubten Teilchenfluß zu bilden, und wobei die Innen- und Außenluftströme zusammen den aufgeladenen Teilchenfluß in Richtung auf die Zielkulturpflanzen hin vorwärtstreiben.

2. Feld-Gebläsespritzvorrichtung nach Anspruch 1, wobei die Spritzdüse eine Spindel (46), die eine mit Außengewinden versehene Außenwand aufweist, und eine Spindelmutter (64) mit Innengewinden umfaßt, die mit den Außengewinden der Spindel (46) in Eingriff kommen können, wobei die Spindelmutter (64) zum Zwecke einer axialen Bewegung enlang dieser drehbar in bezug zur Spindel (46) ist.

3. Feld-Gebläsespritzvorrichtung nach Anspruch 2, die weiterhin eine Vielzahl von beabstandeten Befestigungsarmen (66), die jeder ein inneres, mit der Spindelmutter (64) verbundenes Ende und ein äußeres, sich radial nach außen zur Wand (56) des Gehäuses (44) hin erstreckendes Ende haben, und Mittel (70, 72, 74) zum lösbaren Befestigen der Befestigungsarme (66) an der Wand (56) des Gehäuses (44) umfaßt.

4. Feld-Gebläsespritzvorrichtung nach Anspruch 3, wobei die Wand (56) des Gehäuses mit einer Vielzahl von beabstandeten, mit den Befestigungsarmen (66) fluchtenden Bohrungen (72) ausgebildet ist, wobei das äußere Ende jedes der Befestigungsarme mit einer Innengewindebohrung (70) zur Aufnahme einer Schraube (74) versehen ist, die durch die Bohrungen (72) in der Wand des Gehäuses eingebracht wird, um das Gehäuse mit der Spritzdüse (42) zu verbinden.

FIG. 1

FIG. 2

FIG. 3